# FASCICULE DE BREVET EUROPEEN

(11) **EP 2 775 153 B1**
(45) Date de publication et mention de la délivrance du brevet: **28.12.2016**
(21) Numéro de dépôt: 14290055.4
(22) Date de dépôt: 03.03.2014
(51) Int. Cl.: F16B 7/04, F16L 3/133, F16L 3/24

(54) **Système de fixation d'un corps sur une paroi**
System zur Befestigung eines Körpers an einer Wand
System for attaching a body to a wall

(30) Priorité: 07.03.2013 FR 1300511
(43) Date de publication de la demande: 10.09.2014
(73) Titulaire: Abensour, Samy, 92160 Antony (FR)
(72) Inventeur: Abensour, Samy, 92160 Antony (FR)
(74) Mandataire: Flavenot, Bernard

(56) Documents cités:
- EP-A1- 0 452 256
- DE-A1-102009 017 310
- DE-U1- 9 409 015
- GB-A- 2 399 154
- US-A- 4 662 590
- US-A1- 2001 004 099
- US-B1- 6 712 543

## Description

La présente invention concerne les systèmes de fixation d'un corps sur une paroi qui trouvent une application particulièrement avantageuse dans le domaine notamment de la plomberie et/ou du chauffage-sanitaire et/ou de la climatisation et/ou de la tuyauterie pour fixer de façon apparente des tuyaux, conduits, tubes ou analogues, sur des murs, plafonds, sols ou analogues, tout en permettant de réaliser des assemblages de rails en U, de type STRUT ou analogue, avec des équerres par exemple à 30°, 45°, ou 90°, éclisses plates à deux ou plusieurs trous, éclisses en U, supports muraux, socles, entre autres accessoires, afin de réaliser toutes sortes de configurations nécessitées par la mise en oeuvre d'une installation.

Il est donc particulièrement important de s'assurer de la solidité, de la fiabilité dans le temps et de la sécurité d'une installation, non seulement en ce qui concerne la fixation des tuyaux, conduits, tubes ou analogues, mais également s'agissant de l'assemblage des différents éléments qui concourent à la structure d'une installation donnée.

Il est connu des systèmes de fixation d'un corps sur une paroi, par exemple ceux qui sont décrits dans les US 4662590, US 2001/004099, GB 2399154, EP 0452256 et DE 102009017310.

Cependant, un dispositif comme celui décrit dans le dernier document cité ci-dessus, ne constitue qu'un bouchon adapté pour obturer une extrémité d'un tube profilé. Les éventuels efforts qui sont transmis au profilé par la plaque selon ce document, le sont par les filetages lors du vissage de la vis d'extrémité, ce qui n'assure pas une garantie de fiabilité et de sécurité notamment dans le cas où ces efforts seraient des efforts en traction importants.

Aussi, la présente invention a-t-elle pour but de réaliser un système de fixation d'un corps sur une paroi qui trouve une application particulièrement avantageuse dans les domaines comme ceux évoqués ci-dessus en préambule, pour fixer de façon apparente des corps comme des tuyaux, conduits ou analogues, sur des murs, plafonds ou analogues, pour remédier aux inconvénients mentionnés ci-dessus en proposant en outre une réalisation très simple, peu onéreuse et facile à mettre en oeuvre tout en présentant un encombrement réduit.

Plus précisément, la présente invention a pour objet un système de fixation d'un corps sur une paroi tel que défini dans les revendications annexées et plus particulièrement dans la revendication 1.

D'autres caractéristiques et avantages de la présente invention apparaîtront au cours de la description suivante donnée en regard des dessins annexés à titre illustratif mais nullement limitatif, dans lesquels :
La figure 1 est une vue en perspective très schématique d'un système de fixation d'un corps sur une paroi, et
La figure 2 est une vue en coupe longitudinale d'un mode de réalisation du système selon l'invention, de fixation d'un corps sur une paroi, cette coupe correspondant à une coupe selon le plan P comme celui schématiquement illustré sur la figure 1.

Il est préalablement précisé que, dans la présente description, si l'adverbe "sensiblement" est associé à un qualificatif d'un moyen donné, ce qualificatif doit être compris au sens strict ou approché.

En référence aux deux figures, le système selon l'invention, de fixation d'un corps 10 sur une paroi 11, trouve une application très avantageuse plus particulièrement dans les domaines de la plomberie, du chauffage-sanitaire, de la climatisation pour fixer de façon apparente des corps comme des tuyaux, conduites, tubes ou analogues, même très lourds, sur des murs, plafonds, sols ou analogues, selon toutes directions et en toutes positions.

Le système de fixation comporte au moins un rail 20 ayant une section transversale en forme sensiblement de U avec deux bords rentrants 21, 22 situés respectivement à chaque extrémité des deux branches du U pour délimiter une ouverture longitudinale 24 d'une largeur Lo inférieure à la distance Du séparant intérieurement les deux branches du U, la distance minimale Df séparant les deux bords rentrants et le fond du U étant non nulle, et des moyens 30, schématiquement représentés car étant bien connus en eux-mêmes, pour fixer le rail 20 sur la paroi 11.

Le système comporte en outre au moins un élément de liaison 40 pour relier le rail 20 au corps 10, cet élément de liaison 40 comportant au moins une plaque 41, une tige cylindrique 42, des moyens 43 pour fixer une première extrémité 44 de la tige à la plaque 41 de façon qu'elle soit sensiblement perpendiculaire au plan de cette plaque, et des moyens 45 pour lier au corps 10 la seconde extrémité 46 de la tige 42.

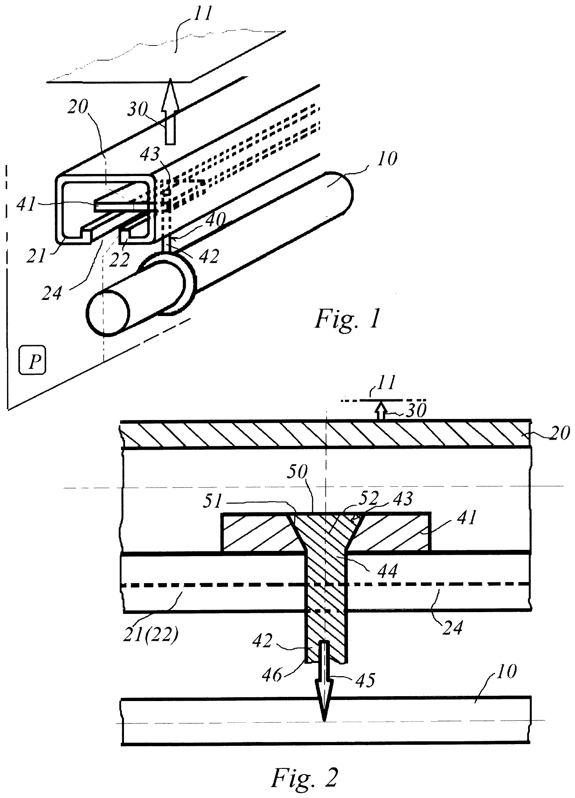

Selon une caractéristique de l'invention, les moyens 43 pour fixer une première extrémité 44 de la tige à la plaque de façon qu'elle soit sensiblement perpendiculaire au plan de cette plaque, sont constitués par un emboîtement conique 50, comme plus particulièrement visible sur la figure 2.

Selon une réalisation avantageuse, cet emboîtement conique 50 est constitué d'un orifice traversant 51 de forme conique réalisé dans la plaque 41 et d'un embout 52 en forme de tronc de cône, cet embout 52 étant solidaire de la première extrémité 44 de la tige 42 par la petite base du tronc de cône, le tronc de cône ayant une forme sensiblement complémentaire de celle de l'orifice traversant.

Cependant, pour obtenir un coincement très résistant, de préférence, l'angle au sommet de l'orifice traversant 51 est légèrement inférieur à l'angle au sommet de l'embout 52.

Quant aux moyens 45 pour lier la seconde extrémité de la tige 42 au corps 10, ils sont choisis par exemple parmi les moyens suivants : collier, soudure, vissage, collage, brassage, sertissage, pinçage, de préférence un collier quand le corps 10 est un tuyau ou analogue.

En outre, de façon très avantageuse tant sur le plan de la réalisation industrielle que pour le montage et le réglage du système, toutes les formes cylindrique et conique sont de révolution.

Enfin, de façon très avantageuse et préférentielle, pour la facilité du montage du système, la plaque 41 est de forme sensiblement parallélépipédique et présente une largeur inférieure à la largeur Lo de l'ouverture longitudinale 24, une longueur supérieure à cette largeur Lo et inférieure à la distance Du séparant intérieurement les deux branches du U, et une épaisseur inférieure à la distance minimale Df définie ci-avant.

Le montage et l'utilisation du système selon l'invention dont un mode de réalisation a été décrit ci-dessus se déduisent aisément de cette description. Ils ne seront donc pas plus amplement développés ici, dans le seul souci de simplifier la description.

A la lecture de la description donnée ci-dessus, il apparaît également, à l'évidence, que le système selon l'invention ne présente pas les inconvénients majeurs des systèmes similaires de l'art antérieur, et qu'il présente bien des avantages dont la plupart ont été précisés au cours de cette description.

Il est même important d'ajouter qu'il a été démontré que, avec les prototypes réalisés par le Demandeur, pour une même charge et pour un même résultat, la plaque 41 du système selon l'invention pouvait avoir une épaisseur inférieure à celle des plaques des systèmes de fixation de l'art antérieur.

En outre, les essais de traction entre, d'une part la tige cylindrique 42, la plaque 41 et le rail 20, et d'autre part l'autre extrémité de la tige cylindrique 42, ont montré que, avec le système selon l'invention, la tige 42 (en diamètre M8) se rompait au niveau de la partie de son filetage se trouvant en dehors du rail, et non pas au niveau de l'embout 52, alors que les mêmes essais effectués sur les systèmes de fixation de l'art antérieur montrent que la rupture intervient le plus souvent au niveau de la tête de la tige qui est associée à la plaque par un système filetage de la tige/ taraudage de la plaque et avec des efforts de traction beaucoup plus faibles.

En d'autres termes, cette invention permet d'augmenter considérablement la résistance à la traction entre la plaque 41 et l'autre extrémité de la tige 42 en la rendant égale à la résistance à la traction du corps de la tige elle-même, et non plus, comme c'est le cas généralement, à celle de l'embout 52.

Le système de fixation selon l'invention présente en outre les avantages suivants : facilité et coût plus faible du montage, lors de la fabrication, de la tige 42 avec la plaque 41; facilité de montage d'une pluralité de systèmes répartis sur une grande longueur le long d'un rail.

Il présente en outre un encombrement réduit dû au fait que la plaque a des dimensions réduites essentiellement au niveau de son épaisseur, ce qui permet de ne prévoir qu'un petit nombre de plaques de différentes dimensions, longueur et/ou largeur, mais avec une seule épaisseur.

Le système dans son entier peut donc être réalisé avec moins de matière, d'où en définitive un coût de revient global très faible, ce qui n'est pas négligeable étant donné le nombre de ces systèmes qui peuvent être employés dans de nombreux endroits et pour de nombreuses applications.

Le système selon l'invention facilite en outre un montage beaucoup plus résistant à la traction de deux rails associés, par exemple, en équerre ou analogue.

Il est aussi précisé que le système selon l'invention peut comporter d'autres éléments que ceux décrits ci-dessus. Par exemple : la tige 42 peut être filetée pour recevoir par exemple un écrou de serrage pour enserrer les deux rebords 21, 22 entre la plaque 41 et une rondelle maintenue au contact de ces deux rebords par l'écrou de serrage.

## Revendications

1. Système de fixation d'un corps (10) sur une paroi (11) comportant au moins :
• un rail (20) ayant une section transversale en forme sensiblement de U avec deux bords rentrants (21, 22) situés respectivement à chaque extrémité des deux branches du U pour délimiter une ouverture longitudinale (24) d'une largeur Lo inférieure à la distance Du séparant intérieurement les deux branches du U, la distance minimale Df séparant les deux bords rentrants du fond du U étant non nulle,
• des moyens (30) pour fixer ledit rail (20) sur la paroi (11), et
• un élément de liaison (40) pour relier ledit rail (20) au dit corps (10), ledit élément de liaison (40) comportant au moins :
* une plaque (41),
* une tige cylindrique (42),
**caractérisé par**
* des moyens (43) pour fixer une première extrémité (44) de la tige à ladite plaque (41) de façon qu'elle soit sensiblement perpendiculaire au plan de cette plaque, et
* des moyens (45) pour lier la seconde extrémité (46) de la tige (42) au dit corps (10), et
**caractérisé par le fait que** ladite plaque (41) est de forme sensiblement parallélépipédique et présente une largeur inférieure à la largeur Lo de l'ouverture longitudinale (24), une longueur supérieure à ladite largeur Lo et inférieure à la distance Du séparant intérieurement les deux branches du U, et une épaisseur inférieure à la distance minimale Df, les moyens (43) pour fixer une première extrémité (44) de la tige à la plaque de façon qu'elle soit sensiblement perpendiculaire au plan de cette plaque étant constitués par un emboîtement conique (50).

2. Système selon la revendication 1, **caractérisé par le fait que** ledit emboîtement conique (50) est constitué d'un orifice traversant (51) de forme conique réalisé dans ladite plaque (41), et d'un embout (52) en forme de tronc de cône, ledit embout (52) étant solidaire de la première extrémité (44) de la tige (42) par la petite base du tronc de cône et ledit tronc de cône ayant une forme sensiblement complémentaire de celle du dit orifice traversant.

3. Système selon la revendication 2, **caractérisé par le fait que** l'angle au sommet du dit orifice traversant (51) est légèrement inférieur à l'angle au sommet du dit embout (52).

4. Système selon l'une des revendications précédentes, **caractérisé par le fait que** les moyens (45) pour lier la seconde extrémité de la tige (42) au dit corps (10) sont choisis parmi les moyens suivants : collier, soudure, vissage, collage, brassage, sertissage, pinçage.

5. Système selon l'une des revendications précédentes, **caractérisé par le fait que**, à titre d'application, le corps (10) est au moins l'un des éléments suivants : tube, conduit, tuyau, rail et accessoires.

6. Système selon l'une des revendications précédentes, **caractérisé par le fait que** les formes cylindrique et conique sont de révolution.

## Patentansprüche

1. System zum Befestigen eines Körpers (10) an einer Wand (11), zumindest umfassend:
• eine Schiene (20), die einen Querschnitt besitzt, der im Wesentlichen die Form eines U mit zwei einspringenden Rändern (21, 22) hat, die sich jeweils an jedem Ende der zwei Schenkel des U befinden, um eine Längsöffnung (24) zu begrenzen, mit einer Breite Lo, die kleiner als der Abstand Du ist, der die zwei Schenkel des U innen trennt, wobei der minimale Abstand Df, der die beiden einspringenden Ränder vom Boden des U trennt, von null verschieden ist,
• Mittel (30), um die Schiene (20) an der Wand (11) zu befestigen, und
• ein Verbindungselement (40), um die Schiene (20) mit dem Körper (10) zu verbinden, wobei das Verbindungselement (40) wenigstens umfasst:
* eine Platte (41),
* einen zylindrischen Stift (42),
**gekennzeichnet durch**
* Mittel (43), um ein erstes Ende (44) des Stifts an der Platte (41) in der Weise zu befestigen, dass er zu der Ebene dieser Platte im Wesentlichen senkrecht ist, und
* Mittel (45), um das zweite Ende (46) des Stifts (42) mit dem Körper (10) zu verbinden, und
**dadurch** gekennzeichnet, dass die Platte (41) im Wesentlichen spatförmig ist und eine Breite, die kleiner als die Breite Lo der Längsöffnung (24) ist, eine Länge, die größer als die Breite Lo und kleiner als der Abstand Du, der die beiden Schenkel des U innen trennt, ist, und eine Dicke, die kleiner als der minimale Abstand Df ist, aufweist, wobei die Mittel (43) zum Befestigen eines ersten Endes (44) des Stifts an der Platte in der Weise, dass er zu der Ebene dieser Platte im Wesentlichen senkrecht ist, **durch** eine konische Ineinanderfügung (50) • ausgebildet sind.

2. System nach Anspruch 1, **dadurch gekennzeichnet, dass** die konische Ineinanderfügung (50) durch eine Durchgangsöffnung (51) mit konischer Form, die in der Platte (41) ausgebildet ist, und durch einen Ansatz (52) mit Kegelstumpfform gebildet ist, wobei der Ansatz (52) mit dem ersten Ende (44) des Stifts (42) an der kleinen Basis des Kegelstumpfs fest verbunden ist, wobei der Kegelstumpf eine Form hat, die zu jener der Durchgangsöffnung im Wesentlichen komplementär ist.

3. System nach Anspruch 2, **dadurch gekennzeichnet, dass** der Scheitelwinkel dieser Durchgangsöffnung (51) geringfügig kleiner als der Scheitelwinkel des Ansatzes (52) ist.

4. System nach einem der vorhergehenden Ansprüche, **dadurch gekennzeichnet, dass** die Mittel (45) zum Verbinden des zweiten Endes des Stifts (42) mit dem Körper (10) unter den folgenden Mitteln gewählt sind:
Laschenverbindung, Schweißverbindung, Schraubverbindung, Klebeverbindung, Hartlötverbindung, Quetschverbindung, Klemmverbindung.

5. System nach einem der vorhergehenden Ansprüche, **dadurch gekennzeichnet, dass** in einer Umsetzung der Körper (10) wenigstens eines der folgenden Elemente ist: Rohr, Leitung, Röhre, Schiene und Zubehör.

6. System nach einem der vorhergehenden Ansprüche, **dadurch gekennzeichnet, dass** die zylindrischen und konischen Formen rotationssymmetrisch sind.

## Claims

1. A system for fastening a body (10) to a wall (11), the system-comprising at least:
• a rail (20) of substantially U-shaped cross-section with two reentrant edges (21, 22) situated respectively at each end of the two flanges of the U-shape in order to define a longitudinal opening (24) of width Lo shorter than the distance Du between the insides of the two flanges of the U-shape, the minimum distance Df between the two reentrant edges from the web of the U-shape being non-zero;
• means (30) for fastening said rail (20) to the wall (11); and
• a connection element (40) for connecting said rail (20) to said body (10), said connection element (40) comprising at least:
• a plate (41); and
• a cylindrical rod (42);
the system being **characterized by**:
• means (43) for fastening a first end (44) of the rod to said plate (41) in such a manner that it is substantially perpendicular to the plane of the plate; and
• means (45) for connecting the second end (46) of the rod (42) to said body (10); and
being **characterized by** the fact that said plate (41) is substantially in the shape of a rectangular parallelepiped and presents a width less than the width Lo of the longitudinal opening (24), a length greater than said width Lo and less than the distance Du between the insides of the two flanges of the U-shape, and a thickness less than the minimum distance Df, the means (43) for fastening a first end (44) of the rod to the plate so that it is substantially perpendicular to the plane of the plate being constituted by a conical fit (50).

2. A system according to claim 1, **characterized by** the fact that said conical fit (50) is constituted by a through orifice (51) of conical shape made in said plate (41) and by an endpiece (52) in the form of a truncated cone, said endpiece (52) being secured to the first end (44) of the rod (42) by the small base of the truncated cone, and said truncated cone being substantially complementary in shape to the shape of said through orifice.

3. A system according to claim 2, **characterized by** the fact that the angle of the apex of said through orifice (51) is slightly smaller than the angle of the apex of said endpiece (52).

4. A system according to any preceding claim, **characterized by** the fact that the means (45) for connecting the second end of the rod (42) to said body (10) are selected from the following means: collar; welding; screw-fastening; adhesive; brazing; crimping; clamping.

5. A system according to any preceding claim, **characterized by** the fact that, by way of application, the body (10) is at least one of the following elements:
a tube; a duct; a pipe; a rail and accessories.

6. A system according to any preceding claim, **characterized by** the fact that the cylindrical and conical shapes are bodies of revolution.
